# EUROPÄISCHE PATENTANMELDUNG

(11) **EP 3 438 556 A1**
(43) Veröffentlichungstag der Anmeldung: **06.02.2019**
(21) Anmeldenummer: 17184777.5
(22) Anmeldetag: 03.08.2017
(51) Int. Cl.: F24D 3/10, F24D 19/10, F04D 15/00, F04D 29/42

(54) **MISCHEINRICHTUNG, HEIZUNGSSYSTEM MIT EINER MISCHEINRICHTUNG UND VERFAHREN**

(71) Anmelder: Grundfos Holding A/S, 8850 Bjerringbro (DK)
(72) Erfinder: BLAD, Thomas, 8850 Bjerringbro (DK); BLAD, Christian, 9000 Aalborg (DK)
(74) Vertreter: Patentanwälte Vollmann & Hemmer

(57) **Zusammenfassung**

Die Erfindung betrifft eine Mischeinrichtung mit einem ersten (84) und einem zweiten (86) Eingang sowie einem Ausgang (80), wobei der erste Eingang (84) mit dem Ausgang (80) über eine erste Strömungsverbindung und der zweite Eingang (86) mit dem Ausgang (80) über eine zweite Strömungsverbindung verbunden ist, wobei die Mischeinrichtung ein Umwälzpumpenaggregat (24; 46) mit einem elektrischen Antriebsmotor (30), einer Steuereinrichtung (34) zur Drehzahlsteuerung des Antriebsmotors (30) und zumindest einem von dem Antriebsmotor angetrieben Laufrad (68; 100) aufweist, dieses zumindest eine Laufrad (68; 100) in der ersten Strömungsverbindung gelegen ist, und dass die Strömungsverbindungen derart ausgestaltet sind, dass zumindest ein von dem Laufrad (68; 100) in der ersten Strömungsverbindung erzeugter hydraulischer Druck als hydraulischer Widerstand in der zweiten Strömungsverbindung wirkt.

## Beschreibung

Gegenstand der Erfindung sind eine Mischeinrichtung, ein Heizungssystem mit einer solchen Mischeinrichtung sowie ein Verfahren zum Temperieren einer Flüssigkeitsströmung.

Häufig werden in Heizungsanlagen Mischer bzw. Mischeinrichtungen verwendet, um die Temperatur eines Heizmediums bzw. Wärmeträgers einzustellen. So ist es beispielsweise für Fußbodenheizungsanlagen üblich, die Vorlauftemperatur des Heizmediums durch Zumischen von Heizmedium aus dem Rücklauf zu reduzieren. Um die Temperatur einstellen und regeln zu können, sind einstellbare Mischventile bekannt, welche elektromotorisch angetrieben werden und das Mischungsverhältnis zwischen heißem Heizmedium und kaltem Heizmedium zu verändern und so eine gewünschte ausgangsseitige Vorlauftemperatur einzustellen. Darüber hinaus sind Umwälzpumpenaggregate erforderlich, um das flüssige Heizmedium, insbesondere Wasser, in den einzelnen Heizkreisen umzuwälzen. In einer üblichen Fußbodenheizungsanlage sind häufig zumindest zwei Umwälzpumpenaggregate vorgesehen, eines, welches das Heizmedium stromabwärts des beschriebenen Mischventiles durch einen Fußboden-Heizkreis fördert, und ein weiteres Umwälzpumpenaggregat in einem Heizkessel, welches das von dem Heizkessel erwärmte Heizmedium fördert und insbesondere auch dem beschriebenen Mischventil zuführt.

Nachteilig an diesen Anordnungen sind die Kosten für die einzelnen Komponenten und die in einem Mischventil auftretende Energieverluste.

Im Hinblick auf diese Problematik ist es Aufgabe der Erfindung, eine kostengünstigere Mischeinrichtung bereitzustellen, welche eine höhere Energieeffizienz aufweist.

Diese Aufgabe wird durch eine Mischeinrichtung mit den in Anspruch 1 angegebenen Merkmalen, durch ein Heizungssystem mit den in Anspruch 14 angegebenen Merkmalen sowie durch ein Verfahren mit den in Anspruch 16 angegebenen Merkmalen gelöst. Bevorzugte Ausführungsformen ergeben sich aus den zugehörigen Unteransprüchen, der nachfolgenden Beschreibung sowie den beigefügten Figuren.

Die erfindungsgemäße Mischeinrichtung ist insbesondere zur Verwendung in einer Heizungs- oder Klimaanlage vorgesehen. Dabei ist zu verstehen, dass, wenn nachfolgend der Begriff "Heizungsanlage" verwendet wird, dies erfindungsgemäß die Verwendung in einer Klimaanlage mit einschließt.

Die erfindungsgemäße Mischeinrichtung weist einen ersten und einen zweiten Eingang auf, durch welchen zu mischende Flüssigkeiten, insbesondere ein flüssiges Heizmedium bzw. Wärmeträger unterschiedlicher Temperaturen der Mischeinrichtung zugeführt werden können. Die Mischeinrichtung weist ferner einen Ausgang auf, aus welchem die gemischte Flüssigkeit austritt. So sind der erste Eingang mit dem Ausgang über eine erste Strömungsverbindung und der zweite Eingang mit dem Ausgang über eine zweite Strömungsverbindung verbunden. Die erste und die zweite Strömungsverbindung münden im Inneren der Mischeinrichtung an einem Mischpunkt ineinander, an dem die Mischung der zugeführten Flüssigkeiten durchgeführt wird. Die Mischeinrichtung weist darüber hinaus ein Umwälzpumpenaggregat mit einem elektrischen Antriebsmotor auf. Das Umwälzpumpenaggregat ist insbesondere als Kreiselpumpenaggregat ausgebildet. Bei dem Antriebsmotor handelt es sich vorzugsweise um einen nasslaufenden elektrischen Antriebsmotor, bei welchem Stator und Rotor durch ein Spaltrohr bzw. einen Spaltrohrtopf getrennt sind. Der Rotor des elektrischen Antriebsmotors kann besonders bevorzugt ein Permanentmagnetrotor sein.

Der elektrische Antriebsmotor weist erfindungsgemäß eine Steuereinrichtung zur Drehzahlsteuerung des Antriebsmotors auf. D. h., die Steuereinrichtung kann die Drehzahl des Antriebsmotors verändern und insbesondere regeln. Dazu kann die Steuereinrichtung mit einem Frequenzumrichter ausgestattet sein. Der Antriebsmotor treibt zumindest ein Laufrad in der Mischeinrichtung an. Dieses zumindest eine Laufrad ist in der ersten Strömungsverbindung durch die Mischeinrichtung gelegen und fördert so, wenn der Antriebsmotor rotiert, Flüssigkeit von dem ersten Eingang zu dem Ausgang der Mischeinrichtung. Erfindungsgemäß sind die Strömungsverbindungen im Inneren der Mischeinrichtung so angeordnet und ausgestaltet, dass zumindest ein von dem Laufrad in der ersten Strömungsverbindung erzeugter hydraulischer Druck als hydraulischer Widerstand in der zweiten Strömungsverbindung wirkt. So kann der hydraulische Druck in der ersten Strömungsverbindung die Strömung in der zweiten Strömungsverbindung über den erzeugten hydraulischen Widerstand beeinflussen. Auf diese Weise ist eine Beeinflussung des Mischungsverhältnisses allein durch hydraulische Mittel in der Mischeinrichtung möglich. Dies hat den Vorteil, dass auf Stellantriebe für ein spezielles Mischventil verzichtet werden kann, sodass insgesamt ein einfacher Aufbau der erfindungsgemäßen Mischeinrichtung erreicht wird. Wenn auf ein oder mehrere Ventile zur Einstellung des Mischungsverhältnisses verzichtet werden kann, kann darüber hinaus der hydraulische Widerstand der gesamten Mischeinrichtung reduziert werden, wodurch Energieverluste in der Mischeinrichtung verringert und minimiert werden.

Die erste und die zweite Strömungsverbindung vereinigen sich vorzugsweise an einem Mündungspunkt. Dieser Mündungspunkt bildet dann den zuvor genannten Mischpunkt. Ferner sind die Strömungsverbindungen vorzugsweise derart ausgebildet, dass der hydraulische Widerstand in Form eines Gegendruckes an dem Mündungspunkt wirkt. Mit ansteigendem Gegendruck verringert sich der Durchfluss durch den zweiten Strömungsweg in den Mündungspunkt hinein, sodass das Mischungsverhältnis durch Veränderung des Gegendruckes veränderbar ist.

Gemäß einer weiteren bevorzugten Ausführungsform der Erfindung weist das zumindest eine Laufrad einen ersten Strömungsweg auf, welcher Teil der ersten Strömungsverbindung ist. Über diesen ersten Strömungsweg wird von dem Laufrad Flüssigkeit durch die erste Strömungsverbindung gefördert. Ferner weist das Laufrad vorzugsweise einen zweiten Strömungsweg auf, welcher Teil der zweiten Strömungsverbindung ist. D. h., über den zweiten Strömungsweg fördert das Laufrad bei seiner Rotation Flüssigkeit durch die zweite Strömungsverbindung. Die Strömungswege sind ferner vorzugsweise derart ausgestaltet, dass ein in dem ersten Strömungsweg erzeugter hydraulischer Druck als hydraulischer Widerstand in dem zweiten Strömungsweg wirkt und/oder dass ein in dem zweiten Strömungsweg erzeugter hydraulischer Druck als hydraulischer Widerstand in den ersten Strömungsweg wirkt. So kann durch den hydraulischen Druck in einem der Strömungswege gleichzeitig über den erzeugten hydraulischen Widerstand in dem anderen Strömungsweg der Durchfluss in diesem anderen Strömungsweg beeinflusst werden. Dies kann entweder in der Weise geschehen, dass ein hydraulischer Druck in dem ersten Strömungsweg als hydraulischer Widerstand in dem zweiten Strömungsweg wirkt oder dass eine wechselseitige Beeinflussung der beiden Strömungswege möglich ist. So kann insbesondere die Mischeinrichtung so ausgestaltet sein, dass in einem ersten Betriebszustand der Druck in dem ersten Strömungsweg einen hydraulischen Widerstand in dem zweiten Strömungsweg bewirkt, während in einem zweiten Betriebszustand der hydraulische Druck in dem zweiten Strömungsweg einen hydraulischen Widerstand in dem ersten Strömungsweg bewirkt. Die Betriebszustände sind dabei insbesondere von der Drehzahl des Laufrades abhängig.

Die Mischeinrichtung ist vorzugsweise so ausgebildet, dass durch Drehzahländerung des Laufrades ein hydraulischer Widerstand in einem der Strömungswege und vorzugsweise hydraulische Widerstände in beiden Strömungswegen geändert werden können, sodass der Durchfluss durch die Strömungswege beeinflusst werden kann, wodurch wiederum ein Mischungsverhältnis zwischen den Strömungen durch die beiden Strömungswege veränderbar ist. So kann durch Drehzahländerung des Laufrades bzw. des Antriebsmotors ein Mischungsverhältnis geändert werden.

Gemäß einer bevorzugten Ausführungsform der Erfindung weist das Umwälzpumpenaggregat in der Mischeinrichtung zwei drehfest zueinander angeordnete, gemeinsam von dem Antriebsmotor angetriebene Laufräder auf, wobei in einem ersten Laufrad ein erster Strömungsweg ausgebildet ist, der Teil der ersten Strömungsverbindung ist, und in einem zweiten Laufrad ein zweiter Strömungsweg ausgebildet ist, welcher Teil der zweiten Strömungsverbindung ist. Die zwei Laufräder können einstückig ausgebildet sein, sodass sie in Form eines Laufrades mit zwei voneinander getrennten Schaufelanordnungen bzw. Schaufelkränzen ausgebildet sind. Es ist jedoch auch möglich, dass die beiden Laufräder als zwei separate Bauteile ausgebildet sind und lediglich drehfest miteinander verbunden sind.

Wenn die beiden Laufräder gemeinsam rotieren, findet sowohl über den ersten Strömungsweg als auch über den zweiten Strömungsweg jeweils eine Förderung und Druckerhöhung statt, sodass Flüssigkeit sowohl durch die erste Strömungsverbindung als auch durch die zweite Strömungsverbindung gefördert wird und jeweils eine Druckerhöhung erfährt.

Der erste und der zweite Strömungsweg in dem zumindest einen Laufrad oder in den beiden drehfest miteinander verbundenen Laufrädern sind weiter bevorzugt derart ausgestaltet, dass sie bei Drehung des zumindest einen Laufrades bzw. der zwei drehfest miteinander verbundenen Laufräder voneinander unterschiedliche, insbesondere verschiedene drehzahlabhängige Druckentwicklungen bewirken. Dies ermöglicht es, durch Drehzahländerung des Laufrades bzw. der Laufräder das Druckverhältnis zwischen den beiden Strömungswegen zu verändern, sodass die gegenseitige Beeinflussung über die erzeugten hydraulischen Widerstände verändert wird und so ein Mischungsverhältnis der Strömungen durch die beiden Strömungsverbindungen veränderbar ist.

Gemäß einer weiteren möglichen Ausführungsform sind die Austrittsseiten des ersten und des zweiten Strömungsweges in radialer Richtung unterschiedlich weit von einer Drehachse des zumindest einen Laufrades beabstandet. Auf diese Weise werden unterschiedliche Druckerhöhungen bei gleicher Drehzahl sowie drehzahlabhängige Druckverläufe in den beiden Strömungswegen realisiert.

Gemäß einer weiteren bevorzugten Ausführungsform der Erfindung verläuft der erste Strömungsweg in dem zumindest einen Laufrad von einem ersten Saugmund zu dem Außenumfang des Laufrades und der zweite Strömungsweg erstreckt sich von zumindest einer zweiten Eintrittsöffnung des Laufrades zu dem Außenumfang des Laufrades. Dabei liegt die zumindest eine zweite Eintrittsöffnung vorzugsweise radial zwischen dem ersten Saugmund und dem Außenumfang des Laufrades. Bei Rotation des Laufrades saugt dieses somit Flüssigkeit durch den Saugmund und durch die zweiten Eintrittsöffnungen an. Wird die Flüssigkeit bereits mit einem entsprechenden Vordruck zugeführt, kann es zu einem Einspritzen der Flüssigkeit in die zweiten Eintrittsöffnungen durch den erhöhten Vordruck kommen. Durch die radiale Beabstandung der zweiten Eintrittsöffnung von dem Saugmund können unterschiedliche Druckerhöhungen bzw. Druckverläufe bei gleicher Drehzahl und weiter bevorzugt unterschiedliche drehzahlabhängige Druckverläufe für den ersten und den zweiten Strömungsweg erreicht werden, welche es ermöglichen, durch Drehzahländerung den hydraulischen Widerstand in zumindest einem der Strömungsverbindungen bzw. Strömungswege zu verändern, um so ein Mischungsverhältnis zu ändern. Ferner ist es möglich, dass an der zweiten Eintrittsöffnung eine Strömung durch den zweiten Strömungsweg mit einer Mischung aus dem ersten Strömungsweg nach einer bereits erfolgten Druckerhöhung der Strömung in dem ersten Strömungsweg erfolgt. So kann die Flüssigkeit in dem ersten Strömungsweg beispielsweise zunächst auf einen Druck erhöht werden, welcher im Wesentlichen dem Druck der an der zweiten Eintrittsöffnung zugeführten Flüssigkeit entspricht.

Weiter bevorzugt mündet die zumindest eine zweite Eintrittsöffnung in zumindest einen zwischen dem ersten Saugmund und dem Außenumfang verlaufenden Strömungskanal, welcher zumindest einen Abschnitt des ersten Strömungsweges bildet. Bei dieser Ausgestaltung bildet somit vorzugsweise ein stromabwärts der zweiten Eintrittsöffnung gelegener Abschnitt des Strömungskanals einen gemeinsamen Strömungsweg, welcher zumindest Teil des ersten als auch Teil des zweiten Strömungsweges ist. D. h., die Flüssigkeit durch den ersten und den zweiten Strömungsweg strömt vorzugsweise stromabwärts der zweiten Eintrittsöffnung durch einen gemeinsamen Strömungskanal des Laufrades, in dem dann eine gemeinsame Druckerhöhung bei Rotation des Laufrades stattfindet. Ein Abschnitt des Strömungskanals, welcher stromaufwärts der zweiten Eintrittsöffnung gelegen ist, ist dabei vorzugsweise allein dem ersten Strömungsweg zugeordnet, sodass in diesem ersten Abschnitt des Strömungskanals eine Druckerhöhung nur der durch den ersten Strömungsweg strömenden Flüssigkeit erfolgt. Abhängig vom Druck dieser Flüssigkeit im Bereich der zumindest einen zweiten Eintrittsöffnung und des Druckes der an der zweiten Eintrittsöffnung zugeführten Flüssigkeit erfolgt dann eine Mischung der Strömungen durch den ersten Strömungsweg und durch den zweiten Strömungsweg im Bereich der zweiten Eintrittsöffnung. Durch Veränderung des Druckverhältnisses und damit des hydraulischen Widerstandes kann dieses Mischungsverhältnis verändert werden.

Weiter bevorzugt weist das zumindest eine Laufrad eine erste Anordnung von Laufradschaufeln auf, zwischen denen zumindest einen Teil des ersten Strömungsweges bildende erste Strömungskanäle gelegen sind, und eine zweite Anordnung von Laufradschaufeln auf, zwischen denen zumindest einen Teil des zweiten Strömungsweges bildende zweite Strömungskanäle gelegen sind. Dabei sind die erste Anordnung von Laufradschaufel und die zweite Anordnung von Laufradschaufeln vorzugsweise in zwei in Richtung der Drehachse des Laufrades versetzten Ebenen gelegen. Eine solche Anordnung bildet praktisch zwei drehfest miteinander verbundene Laufräder, wobei das eine Laufrad durch die erste Anordnung von Laufradschaufeln und das andere Laufrad durch die zweite Anordnung von Laufradschaufeln gebildet wird.

Bevorzugt weist die erste Anordnung von Laufradschaufeln einen anderen Außendurchmesser als die zweite Anordnung von Laufradschaufeln auf. So wird eine unterschiedliche Druckerhöhung und insbesondere ein unterschiedlicher Druckverlauf in Abhängigkeit der Drehzahl des Laufrades erreicht. So kann drehzahlabhängig der hydraulische Widerstand in zumindest einer der Strömungsverbindungen, beispielsweise in den zweiten Strömungskanälen zwischen den Laufradschaufeln der zweiten Anordnung von Laufradschaufeln verändert werden. So kann, wie oben beschrieben, der Durchfluss durch diese Strömungskanäle abhängig von dem erzeugten hydraulischen Widerstand variiert werden.

Gemäß einer weiteren bevorzugten Ausführungsform der Erfindung ist die erste Anordnung von Laufradschaufeln mit dem ersten Saugmund des Laufrades verbunden und die zweite Anordnung von Laufradschaufeln mit einem zweiten Saugmund verbunden, welcher eine zweite Eintrittsöffnung des Laufrades bildet. Dieser zweite Saugmund umgibt den ersten Saugmund vorzugsweise ringförmig. Alternativ könnte der zweite Saugmund auch in axialer Richtung dem ersten Saugmund abgewandt angeordnet sein, sodass die Einströmrichtungen in das Laufrad durch die beiden Saugmünder einander axial entgegengesetzt gerichtet sind. Diese Anordnung hätte den Vorteil, dass sich die auftretenden Axialkräfte zumindest teilweise aufheben. Die ringförmige bzw. konzentrische Anordnung des ersten und des zweiten Saugmundes hat den Vorteil, dass sich eine solche Ausgestaltung relativ einfach in ein bekanntes Pumpengehäuse integrieren lässt.

Gemäß einer weiteren bevorzugten Ausführungsform der Erfindung ist die Steuereinrichtung derart ausgebildet, dass sie die Drehzahl des Antriebsmotors zur Regulierung eines Mischungsverhältnisses zwischen einer Flüssigkeitsströmung durch den ersten Eingang und einer Flüssigkeitsströmung durch den zweiten Eingang variiert. Wie vorangehend bereits beschrieben, ändert sich bei Drehzahländerung des Antriebsmotors bei entsprechender Ausgestaltung des Laufrades und der Strömungswege bzw. Strömungsverbindungen der hydraulische Widerstand in zumindest der zweiten Strömungsverbindung, sodass der Durchfluss in der zweiten Strömungsverbindung variiert werden kann. Darüber kann somit durch Drehzahländerung des Antriebsmotors das Mischungsverhältnis verändert werden, ohne dass ein über einen separaten Stellantrieb einstellbares Mischventil erforderlich wäre.

Vorzugsweise ist die Steuereinrichtung mit zumindest einem Temperatursensor in dem Ausgang oder in einem stromabwärts des Ausgangs gelegenen Strömungsweg verbunden und/oder ist zum Empfang eines Signals von zumindest einem externen Temperatursensor ausgebildet und derart ausgestaltet, dass sie die Drehzahl des Antriebsmotors in Abhängigkeit zumindest eines empfangenen Temperatursignals variiert. D. h., bei dieser Ausgestaltung der Steuereinrichtung findet keine Regelung auf einen gewünschten Druck oder Durchfluss, sondern auf eine gewünschte Temperatur hin statt. Die Steuereinrichtung ist bevorzugt so ausgestaltet, dass sie die Drehzahl des Antriebsmotors so reguliert, dass ein von dem Temperatursensor erfasster Temperaturwert einen vorgegebenen Sollwert erreicht oder einem vorgegebenen Sollwert angenähert wird. Dieser Sollwert kann beispielsweise durch eine Heizkurve vorgegeben sein, welche wiederum z. B. außentemperaturabhängig eine Vorlauftemperatur für das Heizmedium, welche am Ausgang der Mischeinrichtung erreicht werden soll, vorgibt.

Neben der beschriebenen Mischeinrichtung ist Gegenstand der Erfindung ein Heizsystem mit einer Mischeinrichtung, wie sie vorangehend beschrieben wurde. In einem solchen Heizsystem ist der erste Eingang der Mischeinrichtung mit einem Rücklauf zumindest eines Heizkreises, beispielsweise eines Fußboden-Heizkreises, verbunden und der zweite Eingang der Mischeinrichtung ist mit einem von einer Wärmequelle kommenden Vorlauf verbunden. Eine solche Wärmequelle kann beispielsweise ein Heizkessel wie ein Gas- oder Ölheizkessel, ein Wärmespeicher, eine Solaranlage, eine elektrische Wärmequelle, eine Fernwärmeanlage oder ähnliches sein. Die Wärmequelle erwärmt einen flüssigen Wärmeträger bzw. ein flüssiges Heizmedium, welches einem oder mehreren Heizkreisen zugeführt werden soll. Dadurch, dass die Mischeinrichtung dem Heizkreis vorgeschaltet ist, ist es möglich, die Temperatur des flüssigen Heizmediums anzupassen, im Falle einer Heizungsanlage zu reduzieren, indem Heizmedium aus dem Rücklauf zugemischt wird. Mit der erfindungsgemäßen Mischeinrichtung ist es so beispielsweise möglich, mithilfe des Umwälzpumpenaggregates in der Mischeinrichtung das flüssige Heizmedium in dem Heizkreis im Kreislauf zu fördern, während durch den ersten Eingang nur so viel wärmeres Heizmedium zugemischt wird, wie es für den Wärmebedarf des Heizkreises erforderlich ist. Es kann so beispielsweise eine Einspritz-Schaltung realisiert sein, über welche das erwärmte Heizmedium in der Mischeinrichtung in die Strömung durch den Heizkreis eingespritzt wird. Ein entsprechender Teil der Flüssigkeitsströmung wird dann aus dem Heizkreis wieder zurück zu der Wärmequelle geleitet, um dort wieder erwärmt zu werden.

Besonders bevorzugt kann in dem Vorlauf ein zweites Umwälzpumpenaggregat derart angeordnet sein, dass es an dem zweiten Eingang der Mischeinrichtung eine Flüssigkeit, insbesondere einen flüssigen Wärmeträger bzw. ein flüssiges Heizmedium mit einem Vordruck bereitstellt. Ein solches zweites Umwälzpumpenaggregat kann beispielsweise ein Umwälzpumpenaggregat sein, welches in die Wärmequelle, insbesondere einen Heizkessel, integriert ist. Dieses zweite Umwälzpumpenaggregat kann ferner gleichzeitig dazu dienen, die Flüssigkeit bzw. den Wärmeträger einem weiteren Heizkreis zuzuführen. Dadurch, dass die Mischeinrichtung, wie es oben beschrieben wurde, so ausgestaltet ist, dass für die zwei Strömungswege durch das Laufrad unterschiedliche Druckerhöhungen erreicht werden, wird es möglich, den Vordruck, mit welchem die Flüssigkeit an dem zweiten Eingang bereitgestellt wird, auszunutzen. D. h., der Druck muss nicht in einem vorgeschalteten Ventil abgebaut werden, sodass Energieverluste minimiert werden können. Darüber hinaus kann der Vordruck dazu beitragen, dass die drehzahlabhängigen Druckverläufe durch die zwei beschriebenen Strömungswege des Laufrades derart unterschiedlich sind, dass durch Drehzahlvariation der hydraulische Widerstand in zumindest einer der Strömungsverbindungen und insbesondere der zweiten Strömungsverbindung variiert werden kann, um das Mischungsverhältnis zu ändern.

Neben der vorangehend beschriebenen Mischeinrichtung und dem vorangehend beschriebenen Heizungssystem ist Gegenstand der Erfindung ein Verfahren zum Temperieren einer Flüssigkeitsströmung in einer Heizungsanlage, wie es nachfolgend beschrieben wird. Unter Heizungsanlage im Sinne der Erfindung ist darüber hinaus auch eine Klimaanlage zu verstehen, welche dazu dient, eine Anlage oder ein Gebäude zu kühlen. D. h., die Heizungsanlage gemäß der Erfindung kann zum Erwärmen von Räumen bzw. Anlagen und/oder zum Kühlen von Räumen oder Anlagen ausgebildet sein.

Gemäß dem erfindungsgemäßen Verfahren zum Temperieren einer Flüssigkeitsströmung werden zwei unterschiedlich temperierte Flüssigkeitsströmungen, beispielsweise zwei unterschiedlich temperierte Heizmedium- bzw. Wärmeträgerströmungen in einem veränderbaren Mischungsverhältnis gemischt. Dies erfolgt erfindungsgemäß dadurch, dass die zwei unterschiedlich temperierten Flüssigkeitsströmungen einem gemeinsamen Mischpunkt bzw. Mündungspunkt zugeführt werden, an welchem auf zumindest eine der beiden Flüssigkeitsströmungen ein hydraulischer Widerstand wirkt. Dieser hydraulische Widerstand begrenzt die Flüssigkeitsströmung, auf welche er wirkt. Erfindungsgemäß ist dieser hydraulische Widerstand durch hydraulische Mittel zur Veränderung des Mischungsverhältnisses veränderbar. Der hydraulische Widerstand wird somit verändert, um zumindest eine der beiden Flüssigkeitsströmungen zu beeinflussen, sodass sich das Mischungsverhältnis ändert. Die hydraulischen Mittel, welche den hydraulischen Widerstand ändern, sind so ausgestaltet, dass sie auf zumindest eine der beiden Flüssigkeitsströmungen wirken. Wie oben anhand der Mischeinrichtung beschrieben, ist der hydraulische Widerstand insbesondere ein am Mischpunkt wirkender Flüssigkeitsdruck bzw. Gegendruck der anderen zugeführten Flüssigkeitsströmung. Durch unterschiedliche Druckverläufe der Flüssigkeitsströmungen kann über das Umwälzpumpenaggregat durch Drehzahländerung der Gegendruck am Mischpunkt variiert werden, sodass es zu unterschiedlichen Mischungsverhältnissen kommt.

Weiter bevorzugt wird der hydraulische Widerstand durch Veränderung des Flüssigkeitsdruckes der ersten und/oder der zweiten Flüssigkeitsströmung variiert. D. h., zumindest eine der Flüssigkeitsströmungen bildet selber einen hydraulischen Widerstand für die andere Flüssigkeitsströmung. Besonders bevorzugt bilden beide Flüssigkeitsströmungen wechselseitig hydraulische Widerstände. Durch Druckänderung in einer der Flüssigkeitsströmungen wird somit der hydraulische Widerstand in der anderen Flüssigkeitsströmung geändert, sodass der Durchfluss dieser anderen Strömung variiert werden kann, sodass sich unterschiedliche Mischungsverhältnisse ergeben. Vorzugsweise erfolgt in zumindest einer der beiden Flüssigkeitsströmungen eine veränderbare Druckerhöhung durch ein Druckerhöhungsmittel, wobei die Druckerhöhung vorzugsweise durch ein Laufrad eines Kreiselpumpenaggregates erfolgt. Dies kann geschehen, wie es oben anhand der Mischeinrichtung beschrieben wurde. Durch Drehzahländerung des Laufrades des Kreiselpumpenaggregates ändert sich der Druck in zumindest einem Strömungsweg durch das Laufrad, sodass der Druck einer Flüssigkeitsströmung durch diesen Strömungsweg geändert werden kann.

Gemäß einer besonderen Ausführungsform der Erfindung kann eine der beiden Flüssigkeitsströmungen vor Einwirkung des Druckerhöhungsmittels bereits einen höheren Vordruck als die andere Flüssigkeitsströmung aufweisen. Hierdurch kann ein Versatz der drehzahlabhängigen Druckverläufe erreicht werden, welcher bei der Drehzahländerung ausgenutzt werden kann, um das Druckverhältnis der beiden Flüssigkeitsströmungen zueinander zu variieren und damit zumindest den hydraulischen Widerstand auf eine der Flüssigkeitsströmungen zu ändern, um das Mischungsverhältnis einzustellen.

Für weitere Details des erfindungsgemäßen Verfahrens wird auf die obige Beschreibung der Funktion der Mischeinrichtung und des Heizungssystems verwiesen. Dort beschriebene Merkmale sind ebenfalls bevorzugte Gegenstände des erfindungsgemäßen Verfahrens.
Nachfolgend wird die Erfindung beispielhaft anhand der beigefügten Figuren beschrieben. In diesen zeigt:
- Fig. 1: einen hydraulischer Schaltplan einer Heizungsanlage gemäß dem Stand der Technik,
- Fig. 2: einen hydraulischen Schaltplan eines Heizungssystems gemäß einer ersten Ausführungsform der Erfindung,
- Fig. 3: einen hydraulischen Schaltplan eines Heizungssystems gemäß einer zweiten Ausführungsform der Erfindung,
- Fig. 4: einen hydraulischen Schaltplan eines Heizungssystems gemäß einer dritten Ausführungsform der Erfindung,
- Fig. 5: einen hydraulischen Schaltplan eines Heizungssystems entsprechend dem Ausführungsbeispiel gemäß Fig. 3 mit einem Doppellaufrad,
- Fig. 6: Explosionsansicht eines Umwälzpumpenaggregates mit einer Mischeinrichtung entsprechend dem Heizungssystem gemäß Fig. 2, 3 und 5,
- Fig. 7: eine Schnittansicht des Umwälzpumpenaggregates gemäß Fig. 6 entlang seiner Längsachse x,
- Fig. 8: eine Draufsicht auf die Rückseite des Umwälzpumpenaggregates gemäß Figuren 6 und 7,
- Fig. 9: eine teilweise geschnittene Ansicht der Rückseite des Umwälzpumpenaggregates gemäß Fig. 6 bis 8,
- Fig. 10: eine Explosionsansicht eines Umwälzpumpenaggregates mit einer Mischeinrichtung entsprechend dem Ausführungsbeispiel gemäß Fig. 4,
- Fig. 11: eine Schnittansicht des Umwälzpumpenaggregates gemäß Fig. 10 entlang seiner Längsachse X,
- Fig. 12: eine Draufsicht auf die Rückseite des Umwälzpumpenaggregates gemäß Fig. 9 und 10,
- Fig. 13: den Druckverlauf über der Drehzahl für das Ausführungsbeispiel eines Heizungssystems gemäß Fig. 2,
- Fig. 14: den Druckverlauf über der Drehzahl für ein Ausführungsbeispiel eines Heizungssystems gemäß Fig. 3 und
- Fig. 15: den Druckverlauf über der Drehzahl für ein Ausführungsbeispiel eines Heizungssystems gemäß Fig. 4.

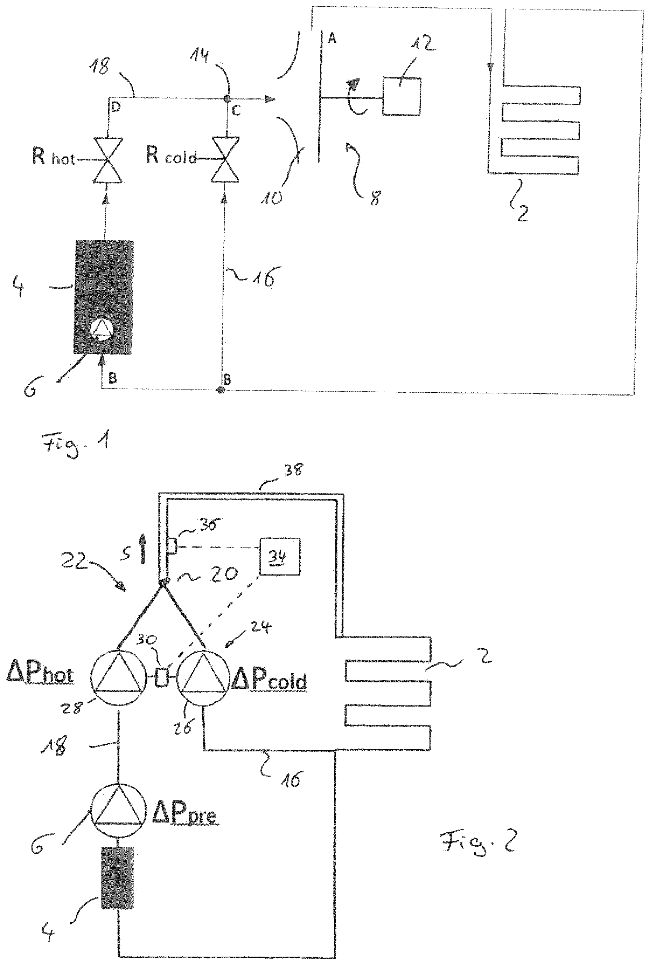

Fig. 1 zeigt schematisch einen herkömmlichen Heizkreis für eine Fußbodenheizung 2, d. h. einen Heizkreis gemäß dem Stand der Technik. Als Wärmequelle dient ein Heizkessel 4, beispielsweise ein Gasheizkessel mit einer integrierten Umwälzpumpe 6. Derartige Kombinationen sind beispielsweise als Kompaktheizungsanlagen am Markt bekannt. Für den Fußbodenheizungskreis 2 ist ein weiteres Umwälzpumpenaggregat 8 mit einem Laufrad 10 sowie einem elektrischen Antriebsmotor 12 vorgesehen. Da der Heizkessel 4 für die Fußbodenheizung 2 eine zu hohe Vorlauftemperatur bereitstellt, ist hier eine Mischeinrichtung vorgesehen, welche einen Mischpunkt 14 aufweist, der an der Saugseite des Laufrades 10 gelegen ist. An dem Mischpunkt 14 mündet eine Rücklaufleitung 16 des Fußbodenheizkreises 2. Ferner mündet an dem Misch- bzw. Mündungspunkt 14 eine Vorlaufleitung 18, über welche das von dem Heizkessel 4 erwärmte Wasser bzw. Heizmedium zugeführt und am Mischpunkt 14 durch den von dem Umwälzpumpenaggregat 6 erzeugten Druck eingespritzt wird. Zur Regulierung des Mischungsverhältnisses sind in diesem Ausführungsbeispiel zwei Durchflussregulierventile Rₕₒₜ und R_{cold} vorgesehen. Das Regulierventil Rₕₒₜ ist in der Vorlaufleitung 18 und das Regulierventil R_{cold} in der Rücklaufleitung 16 angeordnet. Die Ventile können beispielsweise von einer Steuereinrichtung über einen elektrischen Antrieb angesteuert werden. Bevorzugt können die Regulierventile Rₕₒₜ und R_{cold} so gekoppelt sein, dass zur Veränderung des Durchflusses stets eines der Ventile geöffnet und gleichzeitig das andere Ventil um dasselbe Maß geschlossen wird. Anstatt zweier Durchflussregulierventile R kann auch ein 3-Wege-Ventil verwendet werden, welches ein Ventilelement aufweist, das durch seine Bewegung gleichzeitig die Rücklaufleitung 16 verschließt und die Vorlaufleitung 18 öffnet oder umgekehrt. Das Umwälzpumpenaggregat 6 kann ferner einen hier nicht gezeigten weiteren Heizkreis versorgen, welcher direkt mit der vom Heizkessel erzeugten Vorlauftemperatur betrieben wird. Sowohl das Umwälzpumpenaggregat 6 als auch das Umwälzpumpenaggregat 8 können eine herkömmliche Druck- bzw. Durchflussregelung aufweisen. Bei dem bekannten System ist nachteilig, dass zur Einstellung Mischungsverhältnisses die Durchflussregulierventile R erforderlich sind und mit einem entsprechenden Antrieb, beispielsweise einem motorischen oder thermostatisch betätigten Antrieb versehen sein müssen. Die Durchflussregulierventile R werden so geregelt, dass stromabwärts des Mischpunktes 14 eine gewünschte Vorlauftemperatur für die Fußbodenheizung 2 erreicht wird. Ein weiterer Nachteil in diesem System ist, dass der von dem Umwälzpumpenaggregat 6 erzeugte Druck über das Durchflussregulierventil Rₕₒₜ abgebaut werden muss um den saugseitigen Druck des Laufrades 10 am Mischpunkt 14 zu erreichen. Es tritt somit in dem System ein Energieverlust auf, welcher mit der nachfolgend beschriebenen erfindungsgemäßen Lösung vermieden werden kann.

Bei den drei beispielhaft beschriebenen erfindungsgemäßen Lösungen, welche schematisch in Fig. 2 bis 4 dargestellt sind, wird das Mischungsverhältnis zum Erzielen einer gewünschten Vorlauftemperatur für die Fußbodenheizung 2 allein durch eine Drehzahlregelung eines Umwälzpumpenaggregates erreicht. Dieses weist zwei Strömungswege auf, welche sich gegenseitig hydraulisch so beeinflussen, dass durch Drehzahländerung der hydraulische Widerstand in zumindest einem der Strömungswege geändert werden kann, um das Mischungsverhältnis zu ändern, wie es nachfolgend beschrieben werden wird.

Fig. 2 zeigt ein erstes Ausführungsbeispiel der Erfindung. In diesem ist wiederum ein Heizkessel 4 zum Erwärmen eines flüssigen Heizmediums, d. h. eines flüssigen Wärmeträgers wie Wasser vorgesehen. An diesem Heizkessel 4 ist ferner ein Umwälzpumpenaggregat 6 angeordnet, welches auch in den Heizkessel 4 integriert sein könnte, wie es anhand von Fig. 1 erläutert wurde. Das Umwälzpumpenaggregat 6 fördert erwärmten Wärmeträger in einer Vorlaufleitung 18. Ferner ist eine Fußbodenheizung 2 bzw. ein Fußbodenheizkreis 2 vorgesehen, welcher einen Rücklauf aufweist, der zum einen mit der Eingangsseite des Heizkessels 4 verbunden ist und zum anderen über eine Rücklaufleitung 16 zu einem Mischpunkt 20 führt, an welchem auch die Vorlaufleitung 18 mündet. Der Misch- bzw. Mündungspunkt 20 ist Teil einer Mischeinrichtung 22 und ferner eines Umwälzpumpenaggregates 24. Die Mischeinrichtung 22 und das Umwälzpumpenaggregat 24 können eine integrierte Baueinheit bilden, sodass die Mischeinrichtung 22 Teil des Umwälzpumpenaggregates 24 ist bzw. das Umwälzpumpenaggregat 24 Teil der Mischeinrichtung 22 ist. Insbesondere kann der Mischpunkt 20, wie nachfolgend beschrieben werden wird, direkt im Pumpengehäuse oder in einem Laufrad des Umwälzpumpenaggregates 24 liegen.

In dem Ausführungsbeispiel gemäß Fig. 2 ist das Umwälzpumpenaggregat 24 als eine Doppelpumpe mit zwei Laufrädern 26 und 28 ausgebildet. Die Laufräder 26 und 28 werden über einen gemeinsamen Antriebsmotor 30 angetrieben. Die Laufräder 26 und 28 können als separate Laufräder oder als integriertes Laufrad mit zwei Schaufelanordnungen bzw. Strömungswegen ausgebildet sein. Das erste Laufrad 26 bildet einen ersten Strömungsweg und liegt in einer ersten Strömungsverbindung in der Mischeinrichtung von der Rücklaufleitung 16 zu dem Mischpunkt 20. Das zweite Laufrad 28 bildet einen zweiten Strömungsweg und liegt in einer zweiten Strömungsverbindung zwischen der Vorlaufleitung 18 und dem Mischpunkt 20. Der Mischpunkt 20 liegt somit an der Druckseite der beiden Laufräder 26 und 28, d. h. erfindungsgemäß werden die beiden Heizmediumströme nach der Druckerhöhung miteinander gemischt.

Der Antriebsmotor 30 wird von einer Steuereinrichtung 34 gesteuert bzw. geregelt, welche zur Drehzahlregelung bzw. Drehzahlsteuerung des Antriebsmotors 30 dient und so ausgebildet ist, dass sie die Drehzahl des Antriebsmotors 30 verändern kann. Dazu weist die Steuereinrichtung 34 einen Drehzahlsteller insbesondere unter Verwendung eines Frequenzumrichters auf. Die Steuereinrichtung 34 kann direkt in den Antriebsmotor 30 integriert sein oder in einem Elektronikgehäuse direkt an dem Antriebsmotor und insbesondere an dessen Motorgehäuse angeordnet sein. Die Steuereinrichtung 34 ist ferner mit einem Temperatursensor 36 verbunden bzw. kommuniziert mit einem Temperatursensor 36. Der Temperatursensor 36 ist stromabwärts des Mischpunktes 20 an oder in der Vorlaufleitung 38 gelegen, welche den Mischpunkt 20 mit dem Fußbodenheizkreis 2 verbindet. Dabei kann der Temperatursensor 36 in die Mischeinrichtung 22 bzw. das Umwälzpumpenaggregat 24 integriert sein. Die Verbindung des Temperatursensors 36 mit der Steuereinrichtung 34 kann in beliebiger geeigneter Weise vorgesehen sein, beispielsweise drahtgebunden oder auch drahtlos. Eine drahtlose Verbindung kann beispielsweise über eine Funkverbindung wie Bluetooth oder W-LAN realisiert sein.

Der Temperatursensor 36 überträgt einen Temperaturwert des Heizmediums stromabwärts des Mischpunktes 20 an die Steuereinrichtung 34, sodass diese eine Temperaturregelung durchführen kann. Erfindungsgemäß wird der Antriebsmotor 30 und damit das Umwälzpumpenaggregat 34 nicht druck- oder durchflussabhängig, sondern temperaturabhängig geregelt. D. h. die Steuereinrichtung 34 passt die Drehzahl des Antriebsmotors 30 so an, dass eine gewünschte Temperatur des Heizmediums stromabwärts des Mischpunktes 20 erreicht wird. Die gewünschte Temperatur wird durch einen Temperatur-Soll-Wert vorgegeben, welcher fest vorgegeben sein kann, manuell einstellbar sein kann oder auch außentemperaturabhängig durch eine Heizkurve vorgegeben sein kann, welche in der Steuereinrichtung 34 oder einer übergeordneten Steuerung hinterlegt ist. Die Steuereinrichtung 34 variiert die Drehzahl des Antriebsmotors 30, wodurch sich, wie nachfolgend beschrieben wird, das Mischungsverhältnis der Heizmediumströme, welche an dem Mischpunkt 20 gemischt werden, ändert, sodass sich die Temperatur stromabwärts des Mischpunktes 20 ändert. Diese Temperatur wird von dem Temperatursensor 36 erfasst, sodass die Steuereinrichtung 34 durch Drehzahlvariation des Antriebsmotors 30 eine Temperaturregelung vornehmen kann, um den Temperaturwert stromabwärts des Mischpunktes 20 dem Temperatur-Soll-Wert anzunähern.

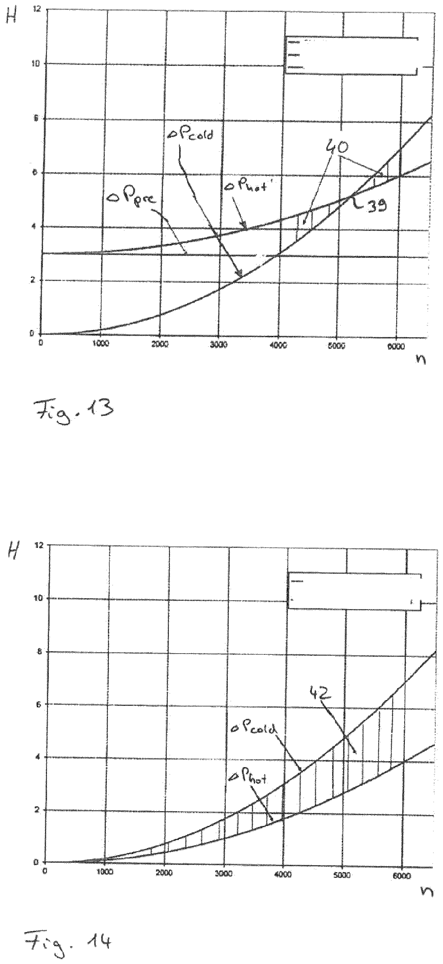

Die Variation des Mischungsverhältnisses an dem Mischpunkt 20 über die Drehzahländerung wird näher anhand von Fig. 13 erläutert. In Fig. 13 ist die Förderhöhe H, d. h. der Druck über der Drehzahl n des Antriebsmotors 30 aufgetragen. Im in Fig. 2 genannten Beispiel gibt es drei Differenzdruckwerte Δ Pₚᵣₑ, ΔPₕₒₜ und ΔP_{cold}. Der Differenzdruck ΔPₚᵣₑ wird von dem Umwälzpumpenaggregat 6 erzeugt und ist von der Mischeinrichtung 22 in diesem Fall nicht beeinflussbar, sodass er in Fig. 13 als konstanter, d. h. von der Drehzahl des Antriebsmotors 30 unabhängiger Vordruck dargestellt ist. Das Laufrad 26 des Umwälzpumpenaggregates 24 erzeugt für den Rücklauf der Fußbodenheizung 2 einen Differenzdruck ΔP_{cold} und das Laufrad 28 erzeugt für den Vorlauf aus der Vorlaufleitung 18 einen Differenzdruck ΔPₕₒₜ. Wie in Fig. 13 zu erkennen ist, sind die Laufräder 26 und 28 unterschiedlich ausgebildet, sodass sie unterschiedliche Druckverläufe, d. h. unterschiedliche drehzahlabhängige Druckverläufe aufweisen. Der Druckverlauf für das Laufrad 28 ist weniger steil als der Druckverlauf des Laufrades 26. Dies kann beispielsweise dadurch erreicht werden, dass das Laufrad 26 einen größeren Außendurchmesser hat. Für das erwärmte Heizmedium, welches durch die Vorlaufleitung 18 zugeführt wird, addieren sich darüber hinaus die Differenzdrücke ΔPₚᵣₑ und ΔPₕₒₜ, sodass die Druckverlaufskurve ΔPₕₒₜ um einen konstanten Wert in dem Diagramm nach oben verschoben ist. Dadurch wird erreicht, dass sich die Druckverlaufskurven ΔPₕₒₜ und ΔP_{cold} in einem Punkt 39 schneiden. Oberhalb und unterhalb des Schnittpunktes dieser Kurven ergeben sich Mischbereiche 40 für die gemischte Flüssigkeit. Bei einer Drehzahl n unterhalb des Schnittpunktes 39 der beiden Druckverlaufskurven ist der Ausgangsdruck des Laufrades 28 höher als derjenige des Laufrades 26, sodass der Ausgangsdruck des Laufrades 28 in dem Strömungsweg durch das Laufrad 26 an dem Mischpunkt 20 als Gegendruck und hydraulischer Widerstand wirkt und in diesem Betriebszustand der Durchfluss durch den ersten Strömungsweg durch das Laufrad 26 reduziert wird und mehr erwärmtes Heizmedium zugemischt wird, um eine höhere Temperatur im Vorlauf 38 zu dem Fußbodenheizkreis 2 zu erreichen. Wenn die Drehzahl erhöht wird, ist oberhalb des Schnittpunktes 39 der beiden Druckverlaufskurven der Ausgangsdruck des Laufrades 26 höher als derjenige des Laufrades 28, sodass in dem zweiten Strömungsweg durch das Laufrad 28 ein hydraulischer Widerstand in Form eines Gegendruckes an dem Mischpunkt 20 erzeugt wird und der Durchfluss durch den zweiten Strömungsweg reduziert wird, wodurch weniger erwärmtes Heizmedium am Mischpunkt 20 zugeführt wird und die Temperatur ausgangsseitig des Mischpunktes 20 reduziert werden kann.

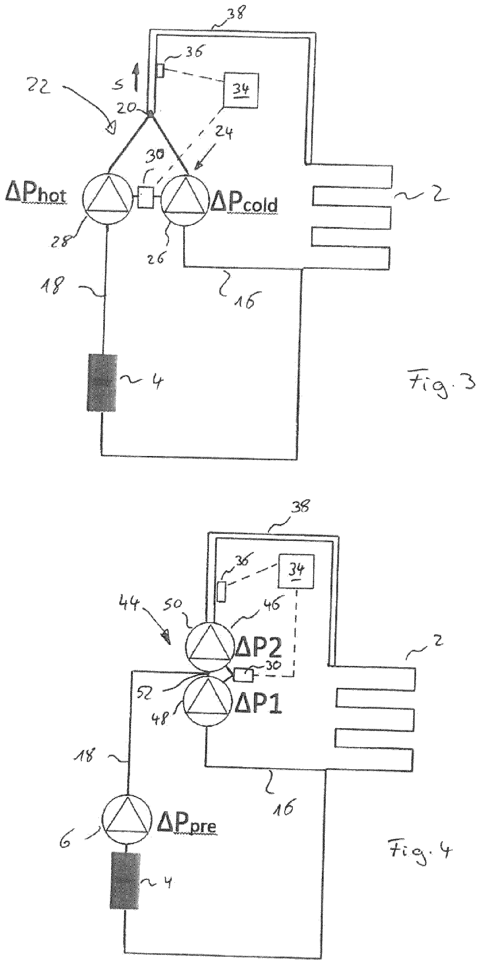

Fig. 3 zeigt eine weitere Variante einer erfindungsgemäßen Mischeinrichtung bzw. eines erfindungsgemäßen Heizungssystems, welche sich von dem Heizungssystem gemäß Fig. 2 dadurch unterscheiden, dass kein Umwälzpumpenaggregat 6 im Vorlauf 18 vorgesehen ist. D. h. das erwärmte Heizmedium wird über die Vorlaufleitung 18 ohne Vordruck dem Umwälzpumpenaggregat 24 zugeführt. Dadurch ergeben sich die in Fig. 14 gezeigten Druckverlaufskurven. In Fig. 14 ist wiederum die Förderhöhe H, d. h. der Druck über der Drehzahl n des Antriebsmotors 30 aufgetragen. Die Druckverlaufskurven ΔP_{cold} und ΔPₕₒₜ entsprechen den Druckverlaufskurven, welche in Fig. 13 gezeigt sind. Es fehlt lediglich der konstante Vordruck ΔPₚᵣₑ, sodass die Druckverlaufskurve ΔPₕₒₜ nicht im Diagramm nach oben verschoben ist, sondern wie die Druckverlaufskurve ΔP_{cold} im Nullpunkt beginnt. Beide Kurven weisen jedoch eine unterschiedliche Steigung auf, was wiederum, wie oben beschrieben durch unterschiedliche Laufraddurchmesser der Laufräder 26 und 28 erreicht wird. Dadurch, dass der Differenzdruck an den Laufrädern 26 und 28 sich bei Drehzahländerung unterschiedlich verändert, verändern sich die hydraulischen Widerstände, wodurch sich ein Mischbereich 42 zwischen den beiden Druckverlaufskurven ergibt mit einem resultierenden Differenzdruck. Der höhere Ausgangsdruck ΔP_{cold} des Laufrades 26 wirkt als hydraulischer Widerstand in dem zweiten Strömungsweg durch das Laufrad 28 an dem Mischpunkt 20. Der hydraulische Widerstand ergibt sich aus der Druckdifferenz zwischen den Ausgangsdrücken der Laufräder 26 und 28 am Mischpunkt 20. Wie in Fig. 14 erkennbar, ist diese Druckdifferenz zwischen den Druckverlaufskurven ΔP_{cold} und ΔPₕₒₜ (der Mischbereich 42) drehzahlabhängig. D. h. auch so kann der hydraulische Widerstand, welcher im Strömungsweg durch das Laufrad 28 wirkt, durch Drehzahländerung variiert werden, sodass der Durchfluss durch das Laufrad 28 und somit der Durchfluss an erwärmten Heizmedium verändert werden kann. Auch so ist eine Änderung der Temperatur ausgangsseitig des Mischpunktes 20 und damit eine Temperaturregelung durch Drehzahländerung der Drehzahl n des Antriebsmotors 30 möglich.

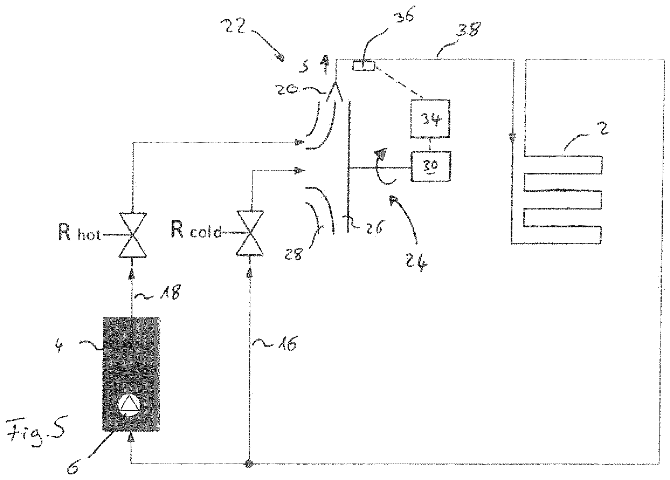

Fig. 5 zeigt ein Ausführungsbeispiel, welches eine Variante des in Fig. 2 gezeigten Ausführungsbeispiels darstellt. Es sind die beiden Laufräder 26 und 28 in Form eines Doppel-Laufrades ausgebildet. D. h. das Laufrad 26 wird von einem ersten Schaufelkranz und das Laufrad 28 von einem zweiten Schaufelkranz desselben Laufrades gebildet. Die Variation des Mischungsverhältnisses am Mischpunkt 20 über Änderung der Drehzahl n des Antriebsmotors 30 erfolgt in derselben Weise wie anhand von Fig. 3 und 13 beschrieben. In diesem Ausführungsbeispiel sind zusätzlich stromaufwärts der Laufräder 26 und 28 in der Vorlaufleitung 18 ein Durchflussregulierventil Rₕₒₜ sowie in der Rücklaufleitung 16 ein Durchflussregulierventil R_{cold} vorgesehen. Bei diesen handelt es sich um manuell einstellbare Ventile, mit welchen eine Voreinstellung vorgenommen werden kann, bevor die beschriebene Drehzahlregelung ausgeführt wird. Die Voreinstellung erfolgt vorzugsweise in der Weise, dass zunächst die Drehzahl des Antriebsmotors 30 so eingestellt wird, dass durch den Fußbodenkreis 2 ein ausreichender Durchfluss erreicht wird. D. h. es wird die Drehzahl der Laufräder 26 und 28 zunächst so eingestellt, dass ein auf die Anlage, d. h. den hydraulischen Widerstand der Anlage abgestimmter Differenzdruck erzeugt wird. Anschließend werden die manuellen Durchflussregulierventile Rₕₒₜ und R_{cold} so eingestellt, dass bei der gegebenen Drehzahl an dem Temperatursensor 36 ein gewünschter Temperatur-Soll-Wert erreicht wird. Dieser Temperatur-Soll-Wert kann beispielsweise ein Temperatur-Soll-Wert sein, welcher bei der aktuellen Außentemperatur von einer Heizkurve vorgegeben wird. Durch die manuelle Voreinstellung wird ein Ausgleich zwischen unterschiedlichen hydraulischen Widerständen in der Vorlaufleitung 18 und der Rücklaufleitung 16 erreicht. Nach dieser Voreinstellung kann dann die Temperaturregelung durch Drehzahlregelung mithilfe der Steuereinrichtung 34 durchgeführt werden, wobei lediglich geringe Drehzahländerungen zur Temperaturanpassung erforderlich sind, wie sich aus dem Diagramm in Fig. 13 ergibt. Derartige Ventile zur Voreinstellung können auch bei den anderen beschriebenen Ausführungsbeispielen eingesetzt werden.

Fig. 4 zeigte eine dritte Variante eines Heizungssystems mit einer erfindungsgemäßen Mischeinrichtung. Auch in diesem Heizungssystem ist ein Heizkessel 4 mit einem stromabwärts angeordneten Umwälzpumpenaggregat 6 vorgesehen. Ferner ist eine zu versorgende Fußbodenheizung 2 bzw. ein Fußbodenheizkreis 2 vorgesehen. Auch hier ist eine Mischeinrichtung 44 vorhanden, in welcher ein Heizmediumstrom aus einem Vorlauf 18, welcher sich ausgehend von dem Heizkessel 4 erstreckt mit einem Heizmediumstrom aus einer Rücklaufleitung 16 aus dem Rücklauf der Fußbodenheizung 2 gemischt wird. In diesem Ausführungsbeispiel weist die Mischeinrichtung 44 wiederum ein Umwälzpumpenaggregat 46 mit einem elektrischen Antriebsmotor 30 auf. Auch dieser Antriebsmotor 30 wird in seiner Drehzahl durch eine Steuereinrichtung 34 geregelt, welche direkt in den Antriebsmotor 30 integriert oder in einem Elektronikgehäuse unmittelbar an dem Antriebsmotor 30 angeordnet sein kann. Die Steuereinrichtung 34 ist wie bei den vorangehenden Ausführungsbeispielen mit einem Temperatursensor 36 kommunikationsverbunden, welcher an einer Vorlaufleitung 38 zu dem Fußbodenkreis 2 hin gelegen ist, sodass er die Vorlauftemperatur des Heizmediums erfasst, welche dem Fußbodenheizkreis 2 zugeführt wird. So kann auch bei dem Umwälzpumpenaggregat 36 in der oben beschriebenen Weise eine temperaturabhängige Drehzahlregelung durchgeführt werden.

Von den vorangehend beschriebenen Ausführungsbeispielen unterscheidet sich das Ausführungsbeispiel gemäß Fig. 4 darin, dass das Umwälzpumpenaggregat zwar keine zwei parallel geschaltete Laufräder aufweist, sondern in Reihe geschaltete Laufradteile 48 und 50. Die Laufradteile 48 und 50 können als zwei separate drehfest miteinander verbundene Laufräder ausgebildet sein, sodass diese über den gemeinsamen Antriebsmotor 30 drehend angetrieben werden. Besonders bevorzugt sind die Laufradteile 48, 50 jedoch als ein Laufrad ausgebildet, welches zwischen einer ersten zentralen Eintrittsöffnung und der Austrittsöffnung, wie unten näher beschrieben wird, zumindest eine zweite Eintrittsöffnung in einem radialen Mittelbereich aufweist. Diese zweite Eintrittsöffnung bildet bei diesem Ausführungsbeispiel den Misch- bzw. Mündungspunkt 52, an welchem die beiden Flüssigkeitsströmungen bzw. Heizmediumströme aus der Rücklaufleitung 16 und der Vorlaufleitung 18 gemischt werden. Über den Laufradteil 48 erfährt der Heizmediumstrom aus der Rücklaufleitung 16 eine erste Druckerhöhung ΔP1 stromaufwärts des Mischpunktes 52. Der Heizmediumstrom aus der Vorlaufleitung 18 erfährt eine Druckerhöhung ΔPₚᵣₑ durch das Umwälzpumpenaggregat 6. Mit diesem Vordruck wird der Heizmediumstrom an dem Mündungspunkt 52 in den Heizmediumstrom, welcher den Laufradteil 48 verlässt, eingespritzt. Der Mündungspunkt 52 und der zweite Laufradteil 50 bilden einen zweiten Strömungsweg, durch welchen der Heizmediumstrom aus der Vorlaufleitung 18 und im weiteren Verlauf stromabwärts des Mündungspunktes 52 auch der Heizmediumstrom aus der Rücklaufleitung 16, welcher zuvor in einem ersten Strömungsweg in dem Laufradteil 48 eine Druckerhöhung erfahren hat, fließen. In dem Laufradteil 50 erfährt der gemischte Heizmediumstrom eine weitere Druckerhöhung ΔP2.

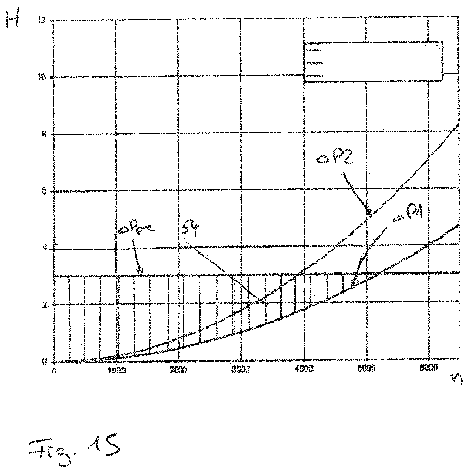

Auch bei dieser Konfiguration kann durch Drehzahländerung das Mischungsverhältnis zwischen dem Heizmediumstrom aus der Rücklaufleitung 16 und dem Heizmediumstrom aus der Vorlaufleitung 18 geändert werden, wie anhand von Fig. 15 näher beschrieben wird. In Fig. 15 sind wiederum die Druckverläufe in Form der Förderhöhe H über der Drehzahl n des Antriebsmotors 30 aufgetragen. In dem Diagramm in Fig. 15 ist der konstante Vordruck ΔPₚᵣₑ, welcher von dem Umwälzpumpenaggregat 6 erzeugt wird als horizontale Linie zu erkennen. Ferner sind die beiden drehzahlabhängigen Druckverläufe ΔP1 und ΔP2 gezeigt. Dabei hat der Druckverlauf ΔP2 einen steileren Verlauf als der Druckverlauf ΔP1, d. h. der Druck ΔP2 steigt mit Erhöhung der Drehzahl stärker an als der Druck ΔP1. Zwischen dem Druckverlauf ΔP1 und dem Vordruck ΔPₚᵣₑ befindet sich ein Mischbereich 54 in dem unterschiedliche Mischungsverhältnisse realisiert werden können. Mit steigenden Druck ΔP1, welchen der Heizmediumstrom aus der Rücklaufleitung 16 in dem Laufradteil 48 erfährt, steigt der hydraulische Widerstand in dem zweiten Strömungsweg zu dem Laufradteil 50 am Mischpunkt 52. Es bildet sich ein Gegendruck an dem Mischpunkt 52, welcher als hydraulischer Widerstand für den Heizmediumstrom dient, welcher aus der Vorlaufleitung 18 in den Mischpunkt 52 eintritt. Je höher der Gegendruck an dem Mischpunkt 52 wird, umso geringer wird der Durchfluss durch diesen zweiten Strömungsweg durch den Mündungspunkt 52, d.h. umso kleiner wird der Heizmediumstrom, welcher aus der Vorlaufleitung 18 in den Mischpunkt 52 und damit den zweiten Strömungsweg eintritt. Mit Übersteigen des Vordruckes ΔPₚᵣₑ durch den Druck ΔP1 wird der Warmwasserstrom, d. h. der Heizmediumstrom aus der Vorlaufleitung 18 vollständig abgeschaltet. So kann durch Drehzahländerung das Mischungsverhältnis verändert werden. In dem zweiten Laufradteil 50 erfährt der gemischte Heizmediumstrom dann die Druckerhöhung auf den Druck ΔP2.

Diese Anordnung hat den Vorteil, dass der Druck ΔPₚᵣₑ, welcher von dem Umwälzpumpenaggregat 6 erzeugt wird, nicht abgebaut werden muss, da die Mischung der beiden Heizmediumströme auf einem höheren Druckniveau, nämlich auf dem Niveau des Druckes ΔP1 stattfindet. Dadurch werden Energieverluste in der Mischeinrichtung 44 verringert.

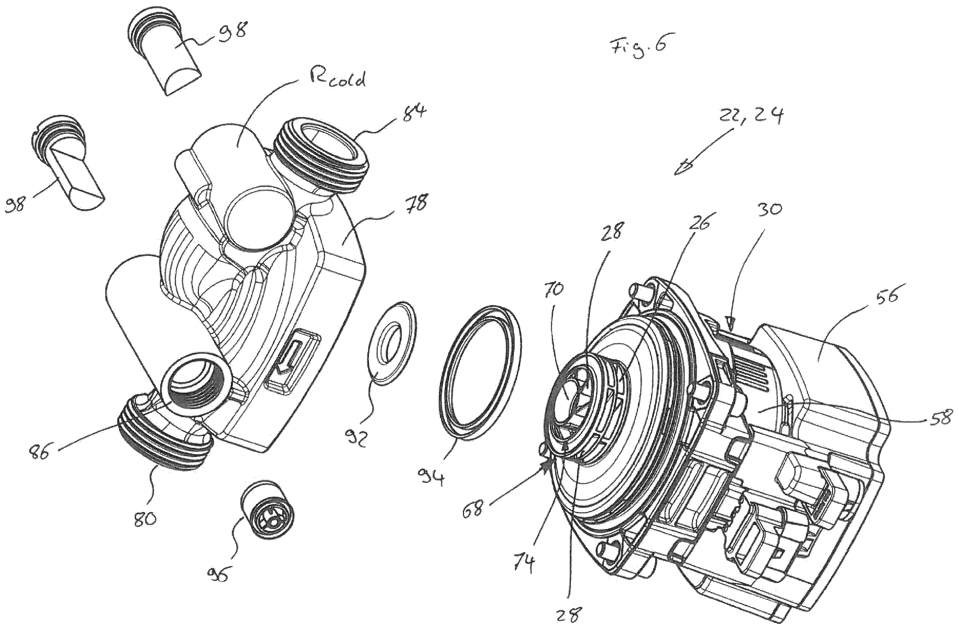

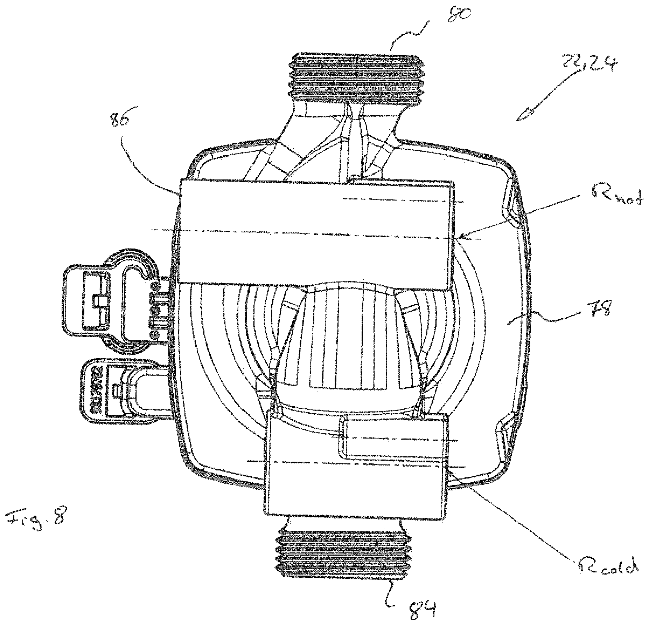

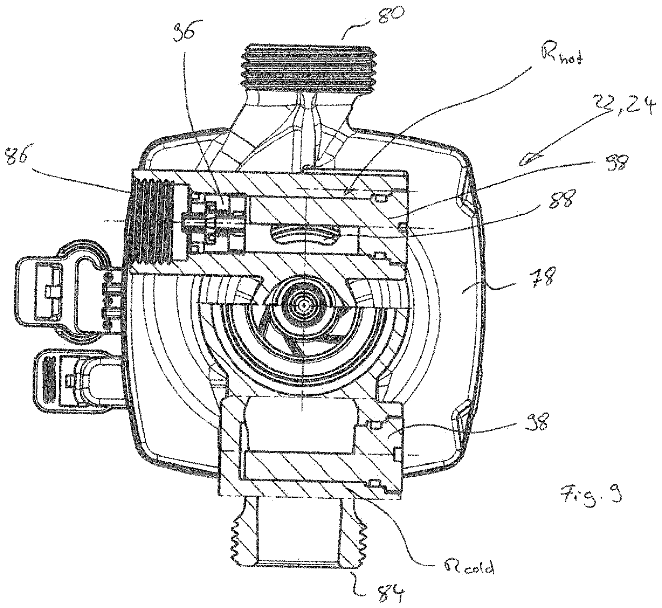

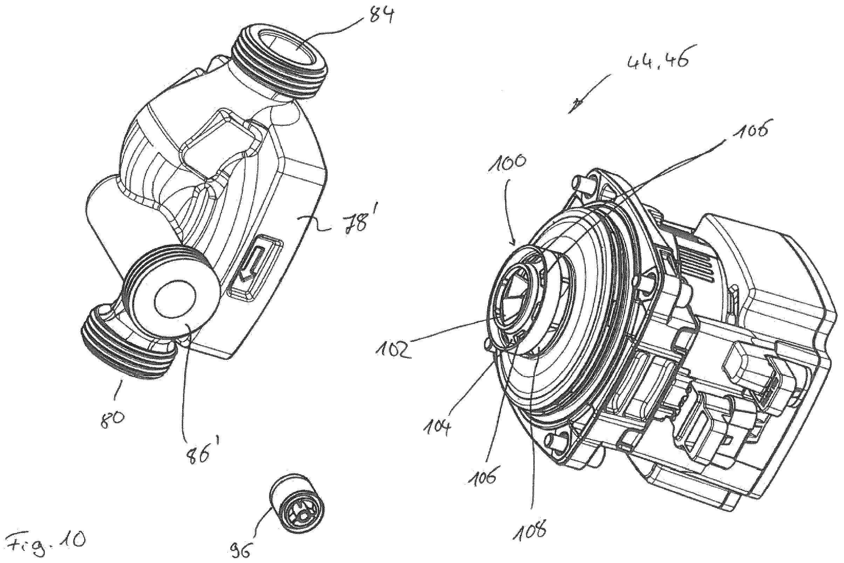

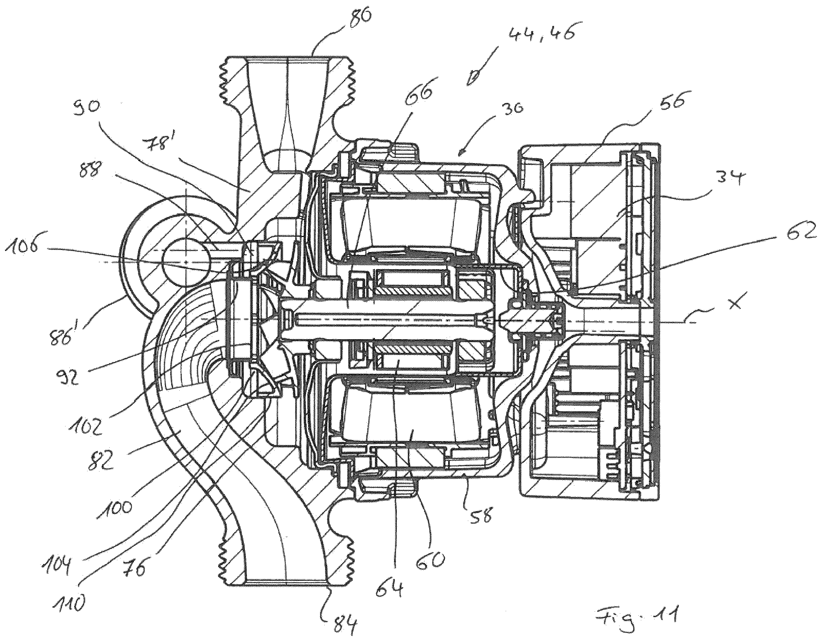

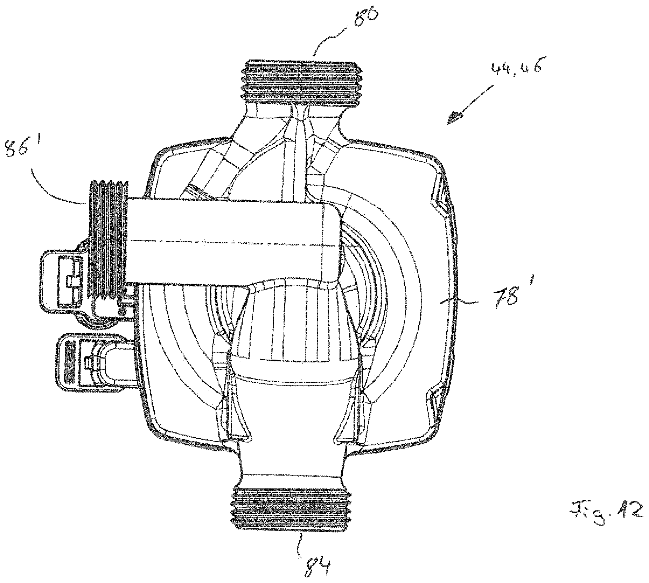

Nachfolgend wird anhand der Figuren 6 bis 12 der konstruktive Aufbau der Mischeinrichtungen 22 und 44 näher beschrieben. Dabei zeigen die Figuren 6 bis 9 eine Mischeinrichtung, welche als Mischeinrichtung 22 in den Ausführungsbeispielen gemäß Figuren 2, 3 und 5 zum Einsatz kommt. Die Figuren 10 bis 12 zeigen eine Mischeinrichtung 44, wie sie bei dem Ausführungsbeispiel gemäß Fig. 4 zum Einsatz kommt.

Das Ausführungsbeispiel gemäß Fig. 6 bis 9 zeigt eine integrierte Umwälzpumpen-Misch-Einrichtung, d. h. ein Umwälzpumpenaggregat mit integrierter Mischeinrichtung bzw. eine Mischeinrichtung mit integrierten Umwälzpumpenaggregat. Das Umwälzpumpenaggregat weist in bekannter Weise einen elektrischen Antriebsmotor 30 auf, an dem ein Elektronikgehäuse bzw. Klemmenkasten 56 angesetzt ist. In dem Elektronikgehäuse ist in diesem Ausführungsbeispiel die Steuereinrichtung 34 angeordnet. Der elektrische Antriebsmotor weist ein Stator- bzw. Motorgehäuse 58 auf, in dessen Inneren der Stator 60 des Antriebsmotors 30 angeordnet ist. Der Stator 60 umgibt einen Spalttopf bzw. ein Spaltrohr 62, welches den Statorraum von einem zentral gelegenen Rotorraum trennt. In dem Rotorraum ist der Rotor 64 angeordnet, welcher beispielsweise als Permanentmagnetrotor ausgebildet sein kann. Der Rotor 64 ist über eine Rotorwelle 66 mit dem Laufrad 68 verbunden, sodass der Rotor 64 bei seiner Rotation um die Drehachse X das Laufrad 68 drehend antreibt.

Das Laufrad 68 ist in diesem Ausführungsbeispiel als Doppellaufrad ausgebildet und vereint die Laufräder 26 und 28, wie sie anhand der Fig. 2 und 5 beschrieben wurde. Das Laufrad 68 weist einen zentralen Saugmund 70 auf, welcher in eine erste Schaufelanordnung bzw. einen ersten Schaufelkranz mündet, welcher das Laufrad 26 bildet. So wird durch den Saugmund 70 und das Laufrad 26 ein erster Strömungsweg durch das Laufrad 68 definiert. Das Laufrad 26 ist geschlossen ausgebildet und weist eine vordere Deckscheibe 72 auf, welche in einen den Saugmund 70 begrenzenden Kragen übergeht. Auf der vorderen Deckscheibe 72 ist ein zweiter Schaufelkranz angeordnet bzw. ausgebildet, welcher das zweite Laufrad 28 bildet. Das zweite Laufrad 28 weist eintrittsseitig einen ringförmigen Saugmund 74 auf, welcher den Saugmund 70 ringförmig umgibt. Der zweite Saugmund 74 bildet eine zweite Eintrittsöffnung des Laufrades 68. Das Laufrad 28 bildet ausgehend von dem zweiten Saugmund 74 einen zweiten Strömungsweg durch das Laufrad 68. Sowohl das Laufrad 26 als auch das Laufrad 28 weisen umfangsseitig Austrittsöffnungen auf, welche in einen Druckraum 76 eines Pumpengehäuses 78 münden.

Das Pumpengehäuse 78 ist in üblicher Weise mit dem Motorgehäuse 58 verbunden. Der Druckraum 76 im Inneren des Pumpengehäuses 78 mündet in einen Druckstutzen 80, an welchen sich in den Ausführungsbeispielen gemäß Fig. 2, 3 und 5 die Vorlaufleitung 38 zu dem Fußbodenheizkreis 2 anschließen würde. Da beide Laufräder 26 und 28 in den Druckraum 76 münden, liegt der anhand von Fig. 2, 3 und 5 beschriebene Mischpunkt 20 austrittsseitig des Laufrades 68 in dem Druckraum 76 des Pumpengehäuses 78.

Der erste Saugmund 70 des Laufrades 68 steht in dem Pumpengehäuse 78 mit einer ersten Saugleitung 82, welche an einem ersten Saugstutzen 84 beginnt, in Verbindung. Dieser erste Saugstutzen 84 liegt axial fluchtend zu dem Druckstutzen 80 entlang einer Einbauachse, die sich normal zur Drehachse X erstreckt. An dem Saugstutzen 84 ist in den Ausführungsbeispielen gemäß Fig. 2, 3 und 5 die Rücklaufleitung 16 angeschlossen. In diesem Ausführungsbeispiel ist in der Saugleitung 82 darüber hinaus ein Durchflussregulierventil R_{cold} angeordnet, wie es in Fig. 5 gezeigt ist.

Von dem Saugstutzen 84, welcher einen ersten Eingang bildet, ist über die Saugleitung 82, den Saugmund 70, das erste Laufrad 26, den Druckraum 76 und den Druckstutzen 80 eine erste Strömungsverbindung durch das Pumpengehäuse 78 definiert. Das Pumpengehäuse 78 weist darüber hinaus einen zweiten Saugstutzen 86 auf, welcher einen zweiten Eingang bildet. Der zweite Saugstutzen ist im Inneren des Pumpengehäuses 78 über einen Verbindungskanal 88 mit einem Ringraum 90 an der Saugseite des Laufrades 68 verbunden. Der Ringraum 90 umgibt ein Ringelement 92 außenumfänglich. Das Ringelement 92 ist in den Saugraum des Pumpengehäuses 78 eingesetzt und ist mit seinem ringförmigen Kragen mit dem den Saugmund 70 umgebenden Kragen in Eingriff, sodass eine gedichtete Strömungsverbindung von dem Saugkanal 82 in den Saugmund 70 hinein geschaffen wird. Außenumfänglich ist das Ringelement 92 von dem Ringraum 90 umgeben, sodass das Ringelement 92 den Strömungsweg zu dem Saugmund 70 von dem Strömungsweg zu dem zweiten Saugmund 74 trennt. In das Pumpengehäuse eingesetzt ist ferner ein ringförmiges Dichtelement 94, welches am Innenumfang des Pumpengehäuses 78 anliegt und mit dem Außenumfang des Laufrades 68 dichtend in Anlage kommt. Dabei ist das Dichtelement 94 im Außenumfangsbereich des zweiten Saugmundes 74 mit dem Laufrad 68 in dichtender Anlage, sodass es den Saugbereich eingangsseitig des Saugmundes 74 von dem Druckraum 76 im Pumpengehäuse trennt.

In dem Strömungsweg von dem zweiten Saugstutzen 86 zu dem Verbindungskanal 88 ist darüber hinaus ein Rückschlagventil 96 angeordnet, welches ein Rückströmen von Flüssigkeit in die Vorlaufleitung 18 verhindert. An den zweiten Saugstutzen 86 wird die Vorlaufleitung 18, wie sie in den Fig. 2, 3 und 5 gezeigt ist, angeschlossen.

Mit dem gezeigten Umwälzpumpenaggregat 24 mit der integrierten Mischeinrichtung 22 kann durch Drehzahländerung des Antriebsmotors 30 eine Temperierung des Heizmediums, welches dem Fußbodenheizkreis 2 zugeführt wird, erreicht werden, wie es anhand der Fig. 2, 3 und 5 sowie 13 und 14 beschrieben wurde.

Über die Durchflussregulierventile R_{cold} und Rₕₒₜ, kann, wie anhand von Fig. 5 beschrieben eine Voreinstellung vorgenommen werden. In diesem Ausführungsbeispiel sind die Durchflussregulierventile R_{cold} und Rₕₒₜ als drehbare Ventilelemente 98 ausgebildet, welche jeweils in einen zylindrischen Aufnahmeraum eingesetzt sind. Durch Drehung gelangen die Ventilelemente 98 unterschiedlich weit in die Saugleitung 82 oder überdecken den Verbindungskanal 88, sodass der freie Strömungsquerschnitt in dem ersten oder zweiten Strömungsweg durch Drehung des entsprechenden Ventilelementes 98 verändert werden kann.

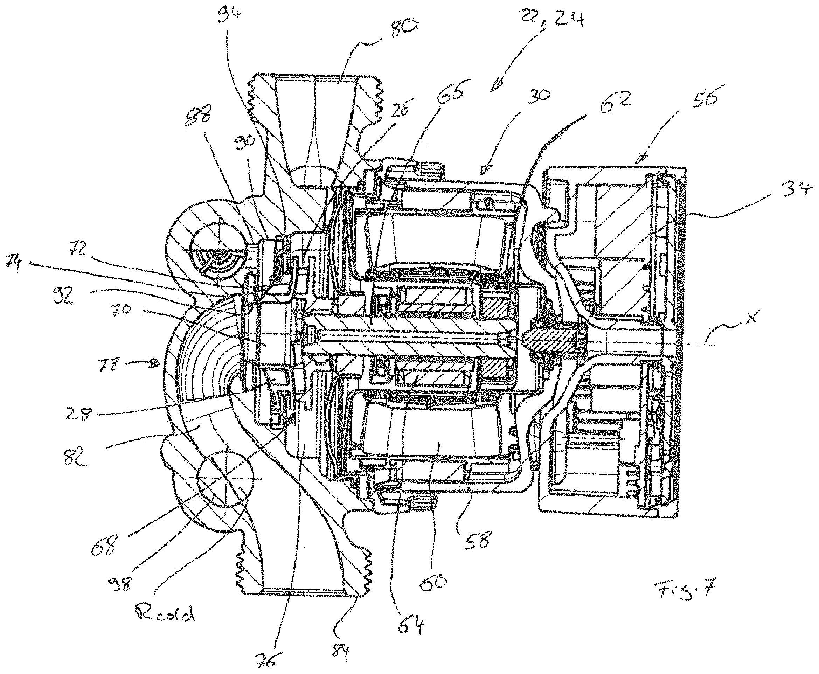

Die Fig. 10 bis 12 zeigen ein Ausführungsbeispiel des Umwälzpumpenaggregates 46 mit der Mischeinrichtung 44, wie es anhand von Fig. 4 und 15 beschrieben wurde. Die Mischeinrichtung 44 und das Umwälzpumpenaggregat 46 stellen auch hier eine integrierte Baueinheit dar. Der Antriebsmotor 30 mit dem angesetzten Elektronikgehäuse 56 entspricht in einem Aufbau dem Antriebsmotor 30, wie er anhand der Fig. 7 bis 9 beschrieben wurde. Auch das Pumpengehäuse 78' entspricht in seinem Aufbau im Wesentlichen dem vorangehend beschriebenen Pumpengehäuse 78. Ein erster Unterschied besteht darin, dass das Pumpengehäuse 78' keine Durchflussregulierventile Rₕₒₜ und R_{cold} aufweist, wobei zu verstehen ist, dass auch in diesem zweiten Ausführungsbeispiel derartige Durchflussregulierventile R vorgesehen sein könnten, wie sie vorangehend beschrieben wurden. Ein zweiter Unterschied besteht darin, dass der zweite Saugstutzen 86' in diesem Ausführungsbeispiel ein Außengewinde aufweist. Es ist jedoch zu verstehen, dass auch der Saugstutzen 86 gemäß dem vorangehenden Ausführungsbeispiel entsprechend ausgestaltet werden könnte oder der Saugstutzten 86' ebenfalls ein Innengewinde aufweisen könnte.

In dem zweiten Ausführungsbeispiel ist ein Laufrad 100 mit der Rotorwelle 66 verbunden. Dieses Laufrad 100 weist einen zentralen Saugmund 102 auf, dessen Umfangsrand mit dem Ringelement 92 in dichtenden Eingriff ist, sodass eine Strömungsverbindung von den ersten Saugstutzen 84 in das Laufrad 100 hineingeschaffen wird. Das Laufrad 100 weist lediglich einen Schaufelkranz auf, welcher einen ersten Strömungsweg ausgehend von dem Saugmund 102, welcher eine erste Eintrittsöffnung bildet, zum Außenumfang des Laufrades 100 definiert. Dieser erste Strömungsweg mündet in den Druckraum 76, welcher mit dem Druckstutzen 80 verbunden ist. Das Ringelement 92 umgebend ist wiederum ein Ringraum 90 vorhanden, in welchen der Verbindungskanal 88 von dem zweiten Saugstutzen 86 mündet. Das Laufrad 100 weist eine vordere Deckscheibe 104 auf. In dieser sind Öffnungen 106 ausgebildet, welche zweite Eintrittsöffnungen bilden. Diese Öffnungen 106 münden in die Strömungskanäle 108 zwischen den Laufradschaufeln. Dabei münden die Öffnungen 106 radial bezogen auf die Drehachse X gesehen in einem Bereich zwischen dem Saugmund 102 und dem Außenumfang des Laufrades 100 in die Strömungskanäle 108. D. h. die Öffnungen 106 münden in einen radialen Mittelbereich des ersten Strömungsweges durch das Laufrad 100. Die Öffnungen 106 und die Strömungskanäle 108 bilden mit ihren Abschnitten radial außenseitig der Öffnungen 106 bilden zweite Strömungswege, welche dem Laufradteil 50, wie er anhand von Fig. 4 beschrieben wurde, entspricht. Der Laufradteil 78 wird durch den radial innenliegenden Laufradteil, d. h. in Strömungsrichtung zwischen dem Saugmund 102 und den Öffnungen 106 gebildet. Die Öffnungen 106 sind dem Ringraum 90 zugewandt, sodass Heizmedium über den Verbindungskanal 88 in diese Öffnungen 106 eintreten kann. Austrittsseitig der Öffnungen 106 liegt somit in den Strömungskanälen 108 in diesem Ausführungsbeispiel der Mischpunkt 52 gemäß Fig. 4.

Das Laufrad 100 weist an seinem Außenumfang, d. h. am Außenumfang der Deckscheibe 104 einen axial gerichteten Kragen 110 auf, welcher am Innenumfang des Pumpengehäuses 78' anliegt und so den Ringraum 90 gegenüber dem Druckraum 76 abdichtet. Mit dem in Fig. 10 bis 12 gezeigten Umwälzpumpenaggregat 46 mit integrierter Mischeinrichtung 44 kann eine Temperaturregelung des Heizmediumstroms, welcher dem Fußbodenheizkreis 2 zugeführt wird, durchgeführt werden, wie sie anhand der Fig. 4 und 15 vorangehend beschrieben wurde.

Bei den drei beispielhaft beschriebenen erfindungsgemäßen Lösungen ist eine Regelung der Temperatur durch Einstellung des Mischungsverhältnisses allein durch Drehzahländerung beschrieben worden. Es ist jedoch zu verstehen, dass eine derartige Vorlauftemperaturregelung auch in Kombination mit einem zusätzlichen Ventil Rₕₒₜ in der Vorlaufleitung 18 und/oder einem Ventil R_{cold} in der Rücklaufleitung 16 realisiert werden könnte. Dabei können die Ventile Rₕₒₜ bzw. R_{cold} gegebenenfalls miteinander gekoppelt sein oder gemeinsam als Drei-Wege-Ventil ausgebildet sein. Ein elektrischer Antrieb dieser Ventile könnte von einer gemeinsamen Steuereinrichtung 34, welche auch die Drehzahl des Antriebsmotors 30 steuert bzw. regelt, angesteuert werden. So kann durch Steuerung der Ventile zusammen mit der Steuerung der Drehzahl des Antriebsmotors 30 das Mischungsverhältnis und damit die Temperatur in der Vorlaufleitung für die Fußbodenheizung geregelt bzw. gesteuert werden. Dadurch kann zum einen ein größerer Regelbereich erreicht werden. Zum anderen können durch größere Ventilöffnungsgrade die Verluste reduziert werden. So lässt sich beispielsweise die Drehzahl nur kurzfristig erhöhen, um eine erhöhte Menge von erwärmtem Heizmedium zuzumischen.

Die Erfindung wurde am Beispiel einer Heizungsanlage beschrieben. Es ist jedoch zu verstehen, dass die Erfindung in entsprechender Weise auch in anderen Anwendungen, in welchen zwei Flüssigkeitsströmungen gemischt werden sollen, Verwendung finden kann. Eine mögliche Anwendung ist beispielsweise ein System zur Einstellung einer Brauchwassertemperatur, wie es in Druckerhöhungspumpen für die Brauchwasserversorgung, in sogenannten Shower-Booster-Pumps, üblich ist.

### Bezugszeichenliste

- 2: Fußbodenheizung, Fußbodenheizkreis
- 4: Heizkessel
- 6: Umwälzpumpenaggregat
- 8: Umwälzpumpenaggregat
- 10: Laufrad
- 12: Antriebsmotor
- 14: Mischpunkt
- 16: Rücklaufleitung
- 18: Vorlaufleitung
- R, Rₕₒₜ, R_{cold}: Durchflussregulierventile
- 20: Mischpunkt
- 22: Mischeinrichtung
- 24: Umwälzpumpenaggregat
- 26, 28: Laufräder bzw. Anordnungen von Laufradschaufeln
- 30: Antriebsmotor
- 34: Steuereinrichtung
- 36: Temperatursensor
- 38: Vorlaufleitung für die Fußbodenheizung 2
- 39: Schnittpunkt
- 40, 42: Mischbereich
- 44: Mischeinrichtung
- 46: Umwälzpumpenaggregat
- 48, 50: Laufradteile bzw. Strömungswege
- 52: Mischpunkt
- 54: Mischbereich
- 56: Elektronikgehäuse
- 58: Motorgehäuse
- 60: Stator
- 62: Spaltrohr
- 64: Rotor
- 66: Rotorwelle
- 68: Laufrad
- 70: Saugmund
- 72: vordere Deckscheibe
- 74: zweiter Saugmund, zweite Eintrittsöffnung
- 76: Druckstutzen
- 78, 78': Pumpengehäuse
- 80: Druckstutzen
- 82: Saugleitung
- 84: Saugstutzen
- 86: zweiter Saugstutzen
- 88: Verbindungskanal
- 90: Ringraum
- 92: Ringelement
- 94: Dichtelement
- 96: Rückschlagventil
- 98: Ventilelemente
- 100: Laufrad
- 102: Saugmund
- 104: Deckscheibe
- 106: Öffnungen, zweite Eintrittsöffnungen
- 108: Strömungskanäle
- 110: Kragen
- s: Strömungsrichtung
- X: Drehachse

## Patentansprüche

1. Mischeinrichtung mit einem ersten (84) und einem zweiten (86) Eingang sowie einem Ausgang (80), wobei der erste Eingang (84) mit dem Ausgang (80) über eine erste Strömungsverbindung und der zweite Eingang (86) mit dem Ausgang (80) über eine zweite Strömungsverbindung verbunden ist,
**dadurch gekennzeichnet, dass**
die Mischeinrichtung ein Umwälzpumpenaggregat (24; 46) mit einem elektrischen Antriebsmotor (30), einer Steuereinrichtung (34) zur Drehzahlsteuerung des Antriebsmotors (30) und zumindest einem von dem Antriebsmotor angetrieben Laufrad (68; 100) aufweist,
dieses zumindest eine Laufrad (68; 100) in der ersten Strömungsverbindung gelegen ist, und dass
die Strömungsverbindungen derart ausgestaltet sind, dass zumindest ein von dem Laufrad (68; 100) in der ersten Strömungsverbindung erzeugter hydraulischer Druck als hydraulischer Widerstand in der zweiten Strömungsverbindung wirkt.

2. Mischeinrichtung nach Anspruch 1, **dadurch gekennzeichnet, dass** sich die erste und die zweite Strömungsverbindung an einem Mündungspunkt (20) vereinigen und die Strömungsverbindungen derart ausgebildet sind, dass der hydraulische Widerstand in Form eines Gegendruckes an dem Mündungspunkt wirkt.

3. Mischeinrichtung nach Anspruch 1 oder 2, **dadurch gekennzeichnet, dass** das zumindest eine Laufrad (68; 100) einen ersten Strömungsweg (26; 48) aufweist, welcher Teil der ersten Strömungsverbindung ist, und einen zweiten Strömungsweg (28; 50) aufweist, welcher Teil der zweiten Strömungsverbindung ist, wobei die Strömungswege (26, 28; 48, 50) vorzugsweise derart ausgestaltet sind, dass ein in dem ersten Strömungsweg (26; 48) erzeugter hydraulischer Druck als hydraulischer Widerstand in dem zweiten Strömungsweg (28; 50) wirkt und/oder dass ein in dem zweiten Strömungsweg (28; 50) erzeugter hydraulischer Druck als hydraulischer Widerstand in dem ersten Strömungsweg (26; 48) wirkt.

4. Mischeinrichtung nach einem der vorangehenden Ansprüche, **dadurch gekennzeichnet, dass** das Umwälzpumpenaggregat (24) zwei drehfest zueinander angeordnete, gemeinsam von dem Antriebsmotor angetriebene Laufräder (26, 28) aufweist, wobei in einem ersten Laufrad (26) ein erster Strömungsweg ausgebildet ist, der Teil der ersten Strömungsverbindung ist, und in einem zweiten Laufrad (28) ein zweiter Strömungsweg ausgebildet ist, welcher Teil der zweiten Strömungsverbindung ist.

5. Mischeinrichtung nach Anspruch 3 oder 4, **dadurch gekennzeichnet, dass**
der erste (26; 48) und der zweite (28; 50) Strömungsweg derart ausgestaltet sind, dass sie bei Drehung des zumindest einen Laufrades (68; 100) voneinander unterschiedliche, insbesondere verschiedene drehzahlabhängige Druckentwicklungen bewirken.

6. Mischeinrichtung nach einem der Ansprüche 3 bis 5, **dadurch gekennzeichnet, dass** die Austrittsseiten des ersten (26) und des zweiten (28) Strömungsweges in radialer Richtung unterschiedlich weit von einer Drehachse (x) des zumindest einen Laufrades (68) beabstandet sind.

7. Mischeinrichtung nach einem der Ansprüche 3 bis 6, **dadurch gekennzeichnet, dass** der erste Strömungsweg (48) in dem zumindest einen Laufrad (100) von einem ersten Saugmund (102) zu dem Außenumfang des Laufrades (100) verläuft und dass der zweite Strömungsweg sich von zumindest einer zweiten Eintrittsöffnung (106) des Laufrades (100) zu dem Außenumfang des Laufrades (100) erstreckt, wobei die zumindest eine zweite Eintrittsöffnung (106) vorzugsweise radial zwischen dem ersten Saugmund (102) und dem Außenumfang des Laufrades (100) gelegen ist.

8. Mischeinrichtung nach Anspruch 7, **dadurch gekennzeichnet, dass** die zumindest eine zweite Eintrittsöffnung (106) in zumindest einen zwischen dem ersten Saugmund (102) und dem Außenumfang verlaufenden Strömungskanal (108), welcher zumindest einen Abschnitt des ersten Strömungsweges bildet, mündet.

9. Mischeinrichtung nach einem der Ansprüche 3 bis 8, **dadurch gekennzeichnet, dass** das zumindest eine Laufrad (68) eine erste Anordnung (26) von Laufradschaufeln, zwischen denen zumindest einen Teil des ersten Strömungsweges bildende erste Strömungskanäle gelegen sind, und eine zweite Anordnung (28) von Laufradschaufeln, zwischen denen zumindest einen Teil des zweiten Strömungsweges bildende zweite Strömungskanäle gelegen sind, aufweist, wobei die erste Anordnung (26) von Laufradschaufeln und die zweite Anordnung (28) von Laufradschaufeln vorzugsweise in zwei in Richtung der Drehachse (x) des Laufrades (68) versetzten Ebenen gelegen sind.

10. Mischeinrichtung nach Anspruch 9, **dadurch gekennzeichnet, dass** die erste Anordnung (26) von Laufradschaufeln einen anderen Außendurchmesser als die zweite Anordnung (28) von Laufradschaufeln aufweist.

11. Mischeinrichtung nach Anspruch 9 oder 10, **dadurch gekennzeichnet, dass** die erste Anordnung (26) von Laufradschaufeln mit dem ersten Saugmund (70) des Laufrades (68) verbunden ist und die zweite Anordnung (28) von Laufradschaufeln mit einem zweiten Saugmund (74) verbunden ist, welcher vorzugsweise den ersten Saugmund (70) ringförmig umgibt oder diesem abgewandt angeordnet ist.

12. Mischeinrichtung nach einem der vorangehenden Ansprüche, **dadurch gekennzeichnet, dass** die Steuereinrichtung (34) derart ausgebildet ist, dass sie die Drehzahl (n) des Antriebsmotors (30) zur Regulierung eines Mischungsverhältnisses zwischen einer Flüssigkeits-Strömung durch den ersten Eingang (84) und einer Flüssigkeits-Strömung durch den zweiten Eingang (86) durch Veränderung des hydraulischen Widerstandes in zumindest der zweiten Strömungsverbindung variiert.

13. Mischeinrichtung nach einem der vorangehenden Ansprüche, **dadurch gekennzeichnet, dass** die Steuereinrichtung (34) mit zumindest einem Temperatursensor (36) in dem Ausgang verbunden ist und/oder zum Empfang eines Signals von zumindest einem externen Temperatursensor ausgebildet ist und derart ausgestaltet ist, dass sie die Drehzahl (n) des Antriebsmotors (30) in Abhängigkeit zumindest eines empfangenen Temperatursignals variiert.

14. Heizungssystem mit einer Mischeinrichtung nach einem der vorangehenden Ansprüche, **dadurch gekennzeichnet, dass** der erste Eingang (84) der Mischeinrichtung mit einem Rücklauf (16) zumindest eines Heizkreises verbunden ist und der zweite Eingang (86) der Mischeinrichtung mit einem von einer Wärmequelle (4) kommenden Vorlauf (18) verbunden ist.

15. Heizungssystem nach Anspruch 14, **dadurch gekennzeichnet, dass** in dem Vorlauf (18) ein zweites Umwälzpumpenaggregat (6) derart angeordnet ist, dass es an dem zweiten Eingang (86) der Mischeinrichtung eine Flüssigkeit mit einem Vordruck bereitstellt.

16. Verfahren zum Temperieren einer Flüssigkeitsströmung in einer Heizungsanlage, bei welchem zwei unterschiedlich temperierte Flüssigkeitsströmungen in einem veränderbaren Mischungsverhältnis gemischt werden,
**dadurch gekennzeichnet, dass**
die zwei unterschiedlich temperierten Flüssigkeitsströmungen einem gemeinsamen Mischpunkt (20) zugeführt werden, an welchem auf zumindest eine der beiden Flüssigkeitsströmungen ein hydraulischer Widerstand wirkt, und
dass dieser hydraulische Widerstand durch hydraulische Mittel, welche auf zumindest eine der beiden Flüssigkeitsströmungen wirken, zur Veränderung des Mischungsverhältnisses verändert wurde.

17. Verfahren nach Anspruch 16, **dadurch gekennzeichnet, dass** der hydraulische Widerstand durch den Flüssigkeitsdruck an dem Mischpunkt (20) gebildet wird.

18. Verfahren nach Anspruch 16 oder 17, **dadurch gekennzeichnet, dass** der hydraulische Widerstand durch Veränderung des Flüssigkeitsdruckes der ersten und/oder der zweiten Flüssigkeitsströmung variiert wird.

19. Verfahren nach einem der Ansprüche 16 bis 18, **dadurch gekennzeichnet, dass** in zumindest einer der beiden Flüssigkeitsströmungen eine veränderbare Druckerhöhung durch ein Druckerhöhungsmittel erfolgt, wobei die Druckerhöhung vorzugsweise durch ein Laufrad (68; 100) eines Kreiselpumpenaggregates (24; 46) erfolgt.

20. Verfahren nach Anspruch 19, **dadurch gekennzeichnet, dass** eine der beiden Flüssigkeitsströmungen vor Einwirkung des Druckerhöhungsmittels bereits einen höheren Vordruck als die andere Flüssigkeitsströmung aufweist.
